# EUROPÄISCHE PATENTANMELDUNG

(11) **EP 4 141 716 A1**
(43) Veröffentlichungstag der Anmeldung: **01.03.2023**
(21) Anmeldenummer: 21203260.1
(22) Anmeldetag: 18.10.2021
(51) Int. Cl.: G06F 21/57

(54) **VERFAHREN ZUR FESTSTELLUNG EINER OBSOLESZENZ EINER KONFORMITÄT EINES TECHNISCHEN GERÄTS ODER GERÄTESYSTEMS, COMPUTERPROGRAMMPRODUKT UND PRÜFRECHNER**

(30) Priorität: 30.08.2021 DE 102021209479
(71) Anmelder: Siemens Aktiengesellschaft, 80333 München (DE)
(72) Erfinder: Fischer, Christoph, 80687 München (DE); Limmer, Tobias, 80797 München (DE); Petri, Bernhard, 81477 München (DE); Rammig, Ralf, 81739 München (DE); Riedmüller, Reinhard, 81735 München (DE)

(57) **Zusammenfassung**

Bei dem Verfahren zur Feststellung einer Obsoleszenz einer Konformität eines technischen Geräts oder technischen Gerätesystems mit einer technischen Spezifikation zur IT-Sicherheit werden
- IT-Sicherheitsparameter herangezogen, dem die Spezifikation genügt,
- den IT-Sicherheitsparametern wird jeweils mindestens eine potenzielle Vulnerabilitätsinformation zugeordnet, wobei das tatsächliche Auftreten der Vulnerabilitätsinformation fortdauernd überwacht wird, und abhängig von einem Auftreten der Vulnerabilitätsinformation wird eine Obsoleszenz der Konformität festgestellt.

## Beschreibung

Die Erfindung betrifft ein Verfahren zur Feststellung einer Obsoleszenz einer Konformität eines technischen Geräts oder technischen Gerätesystems mit einer technischen Spezifikation zur IT-Sicherheit sowie ein Verfahren zum Betreiben eines technischen Geräts oder technischen Gerätesystems und ein Computerprogrammprodukt und einen Prüfrechner.

Häufig werden technische Geräte und technische Gerätesysteme, insbesondere Automatisierungsnetzwerke wie Fertigungsanlagen oder verfahrenstechnische Anlagen oder Geräte in solchen Automatisierungsnetzwerken, mittels Zertifikate zur IT-Sicherheit zertifiziert. Solche Zertifikate dokumentieren die Konformität des technischen Geräts oder Gerätesystems mit einer technischen Spezifikation zur IT-Sicherheit.

Regelmäßig weisen solche Zertifikate eine vordefinierte und begrenzte zeitliche Gültigkeit auf, d. h. nach einer gewissen Zeit ist das Zertifikat obsolet. Der Grund für eine solche begrenzte zeitliche Gültigkeit von Zertifikaten ist das Aufkommen neu entdeckter Schwachstellen oder neu entwickelter Angriffstechniken auf technische Geräte und technische Gerätesysteme.

Gleichwohl können technische Geräte und technische Gerätesysteme auch nach Ablauf eines solchen Zertifikats, d.h. wenn das Zertifikat obsolet geworden ist, grundsätzlich den Vorgaben der IT-Sicherheit des Zertifikats genügen. In anderen Fällen können auch zeitlich noch als sicher geltende Zertifikate zur IT-Sicherheit als sicher gelten, obwohl zwischenzeitlich die IT-Sicherheit kompromittiert ist.

Es ist daher Aufgabe der Erfindung, ein verbessertes Verfahren zur Feststellung einer Obsoleszenz einer Konformität eines technischen Geräts oder Gerätesystems mit einer technischen Spezifikation zur IT-Sicherheit anzugeben. Zudem ist es Aufgabe der Erfindung, ein verbessertes Verfahren zum Betreiben eines Geräts oder Gerätesystems sowie ein verbessertes Computerprogrammprodukt und einen verbesserten Prüfrechner anzugeben, mittels welchem sich das erfindungsgemäße Verfahren ausführen lässt.

Diese Aufgabe der Erfindung wird mit einem Verfahren zur Feststellung einer Konformität eines technischen Geräts oder eines technischen Gerätesystems mit einer technischen Spezifikation zur IT-Sicherheit mit den in Anspruch 1 angegebenen Merkmalen, mit einem Verfahren zum Betreiben eines Geräts mit den in Anspruch 10 angegebenen Merkmalen sowie mit einem Computerprogrammprodukt mit den in Anspruch 11 angegebenen Merkmalen sowie mit einem Prüfrechner mit den in Anspruch 12 angegebenen Merkmalen gelöst. Bevorzugte Weiterbildungen der Erfindung sind in den zugehörigen Unteransprüchen, der nachfolgenden Beschreibung und der Zeichnung angegeben.

Bei dem erfindungsgemäßen Verfahren zur Feststellung einer Obsoleszenz einer Konformität eines technischen Geräts oder eines technischen Gerätesystems mit einer technischen Spezifikation zur IT-Sicherheit werden, vorzugsweise zwei oder mehr, IT-Sicherheitsparameter des technischen Geräts herangezogen, die der Spezifikation genügen, und es wird den IT-Sicherheitsparametern jeweils mindestens eine potenzielle, d. h. eine potenziell auftretende, IT-Sicherheitsrelevanzinformation zugeordnet, wobei das tatsächliche Auftreten der IT-Sicherheitsrelevanzinformation fortdauernd überwacht wird, und es wird abhängig von einem Auftreten der IT-Sicherheitsrelevanzinformation eine Obsoleszenz der Konformität festgestellt.

Vorzugsweise werden bei den erfindungsgemäßen Verfahren die IT-Sicherheitsparameter herangezogen, indem die IT-Sicherheitsparameter bestimmt werden. Geeigneterweise werden die IT-Sicherheitsparameter bei einer vorhergehenden Prüfung der Konformität des technischen Geräts oder Gerätesystems mit der technischen Spezifikation bestimmt und für die Feststellung der Obsoleszenz herangezogen.

Bevorzugt handelt es sich bei der IT-Sicherheit im Sinne der vorliegenden Erfindung um eine Informationssicherheit. Alternativ oder zusätzlich und ebenfalls bevorzugt handelt es sich bei der IT-Sicherheit um eine Funktionssicherheit.

Technische Gerätesysteme im Sinne der vorliegenden Erfindung können insbesondere Automatisierungsnetzwerke sein, vorzugsweise Fertigungsanlagen oder verfahrenstechnische Anlagen.

Unter einer IT-Sicherheitsrelevanzinformation im Sinne der vorliegenden Erfindung ist eine Information zu verstehen, welche eine potentielle Beeinträchtigung der IT-Sicherheit angibt. Dabei betrifft die IT-Sicherheitsrelevanzinformation denjenigen IT-Sicherheitsparameter, dem die IT-Sicherheitsrelevanzinformation zugeordnet ist. Vorzugsweise ist die IT-Sicherheitsrelevanzinformation eine Vulnerabilitätsinformation.

Unter einer Vulnerabilitätsinformation im Sinne der vorliegenden Anmeldung ist eine Schwachstelleninformation zu demjenigen IT-Sicherheitsparameter zu verstehen, dem die Vulnerabilitätsinformation zugeordnet ist. Eine potenzielle Vulnerabilitätsinformation ist eine möglicherweise auftretende, d.h. bekannt werdende, Schwachstelleninformation, die vorzugsweise aktuell noch nicht vorliegt, d. h. bekannt ist.

Mittels des erfindungsgemäßen Verfahrens ist es vorteilhaft nicht erforderlich, Konformitätserklärungen wie insbesondere Sicherheitszertifikate über eine Konformität eines technischen Geräts oder Gerätesystems mit einer zeitlichen Gültigkeitsdauer zu versehen. Vorteilhaft können solche Konformitätserklärungen eine fortbestehende Gültigkeit besitzen, solange keine IT-Sicherheitsrelevanzinformation zu einem IT-Sicherheitsparameter bekannt ist, d.h. solange die Konformität des technischen Geräts oder Gerätesystems mit der technischen Spezifikation nicht in Zweifel steht. Mittels des erfindungsgemäßen Verfahrens können Konformitätserklärungen also so lange gültig bleiben, solange die Konformität tatsächlich besteht. Umgekehrt können Konformitätserklärungen vorteilhaft unabhängig von einer zeitlichen Gültigkeit für ungültig erklärt werden, sobald eine IT-Sicherheitsrelevanzinformation zu einem IT-Sicherheitsparameter bekannt wird.

Vorzugsweise wird bei dem erfindungsgemäßen Verfahren dann, wenn das Auftreten der IT-Sicherheitsrelevanzinformation festgestellt wird, die Obsoleszenz der Konformität festgestellt. In dieser Weiterbildung der Erfindung ist keine weitere Prüfung des technischen Geräts oder Gerätesystems erforderlich, sondern die Obsoleszenz kann endgültig angenommen werden.

Zweckmäßig wird bei dem erfindungsgemäßen Verfahren die Konformität mittels eines Zertifikats dokumentiert. In dieser Weiterbildung der Erfindung kann das Zertifikat dann, wenn die Obsoleszenz der Konformität des technischen Geräts oder technischen Gerätesystems mit den Erfordernissen des Zertifikats festgestellt wird, entweder eine Rezertifizierung des technischen Geräts oder Gerätesystems mit dem Zertifikat durchgeführt werden oder das Zertifikat kann öffentlich für obsolet erklärt, d. h. widerrufen, werden. Vorzugsweise wird in einer vorteilhaften Weiterbildung der Erfindung die Konformität mittels eines Zertifikats dokumentiert und dann, wenn die Obsoleszenz der Konformität des technischen Geräts oder Gerätesystems festgestellt wird, das Zertifikat für ungültig erklärt und/oder widerrufen oder das technische Gerät oder Gerätesystem vorzugsweise aktualisiert und eine Rezertifizierung des technischen Geräts oder Gerätesystems durchgeführt.

In einer vorteilhaften Weiterbildung des erfindungsgemäßen Verfahrens wird dann, wenn das Auftreten der IT-Sicherheitsrelevanzinformation festgestellt wird, das technisehe Gerät oder Gerätesystem einem Test auf Konformität mit der technischen Spezifikation unterzogen und abhängig von dem Test die Obsoleszenz der Konformität festgestellt. Auf diese Weise kann das technische Gerät oder Gerätesystem bei einem Auftreten der IT-Sicherheitsrelevanzinformation insbesondere aktualisiert werden und es kann die Konformität des technischen Geräts oder Gerätesystems mit der technischen Spezifikation erneut geprüft und gegebenenfalls festgestellt werden, sodass zunächst keine manuelle Rezertifizierung des technischen Geräts oder Gerätesystems erforderlich ist, es sei denn der Test stellt eine fehlende Konformität fest. Im letzteren Fall kann die Obsoleszenz festgestellt werden.

Vorzugsweise sind oder umfassen bei dem Verfahren gemäß der Erfindung die IT-Sicherheitsparameter eine oder mehrere der nachfolgenden Größen: eine Komponente des technischen Geräts oder Gerätesystems, insbesondere eine Hardwarekomponente und/oder Softwarekomponente, und/oder ein Algorithmus des technischen Geräts oder Gerätesystems und/oder ein Konfigurationsdatum des technischen Geräts oder Gerätesystems.

Geeigneterweise wird bei dem erfindungsgemäßen Verfahren die IT-Sicherheitsrelevanzinformation überwacht, indem eine Schwachstellen-Datenbank wiederholt, vorzugsweise in regelmäßigen oder vordefinierten Intervallen, abgefragt wird. Solche vordefinierten Intervalle können zweckmäßig mit vordefinierte Mitteilungszeitpunkten von Schwachstelleninformationen zusammenfallen, etwa mit vordefinierten Mitteilungszeitpunkten von Schwachstellen zu einer Open-Source-Bibliothek, zweckmäßig mittels eine Entwickler-Plattform der Open-Source-Bibliothek.

Das erfindungsgemäße Verfahren wird zweckmäßig dann, wenn sich eine Umgebungsanforderung an das technische Gerät oder das technische Gerätesystem ändert, wiederholt. Auf diese Weise kann das erfindungsgemäße Verfahren flexibel auf geänderte Umgebungsanforderungen an das technische Gerät oder Gerätesystem reagieren. Vorzugsweise ist der Umgebungsparameter ein Vorliegen oder ein Nichtvorliegen einer bestimmten Firewall einer Anlage, dessen Bestandteil das technische Gerät oder technische Gerätesystem ist, wobei die Anlage neben dem technischen Gerät oder Gerätesystem weitere technische Komponenten umfasst. In dieser Weiterbildung der Erfindung wird eine neu installierte Firewall oder Änderung der Firewall zum Anlass genommen, das erfindungsgemäße Verfahren erneut durchzuführen.

Bevorzugt wird bei dem Verfahren gemäß der Erfindung dann, wenn das Auftreten einer IT-Sicherheitsrelevanzinformation festgestellt wird, das technische Gerät oder Gerätesystem zumindest hinsichtlich des IT-Sicherheitsparameters, dem die IT-Sicherheitsrelevanzinformation zugeordnet ist, einer Aktualisierung, insbesondere einer Softwareaktualisierung, unterzogen.

In einer vorteilhaften Weiterbildung des erfindungsgemäßen Verfahrens weist das technische Gerät eine Maschine und/oder ein Steuerungsgerät, insbesondere ein Anlagensteuerungsgerät, und/oder einen Sensor und/oder einen Aktor auf oder das technische Gerät ist eine Maschine und/oder ein Steuerungsgerät und/oder ein Sensor und/oder ein Aktor. Das technische Gerätesystem weist vorzugsweise eines oder mehrere der vorgenannten technischen Geräte auf.

Bevorzugt wird das erfindungsgemäße Verfahren computerimplementiert durchgeführt, d. h. die Schritte des erfindungsgemäßen Verfahrens werden vorzugsweise mittels eines Computers durchgeführt.

Bei dem erfindungsgemäßen Verfahren zum Betreiben eines technischen Geräts oder eines technischen Gerätesystems wird ein erfindungsgemäßes Verfahren zur Feststellung einer Obsoleszenz einer Konformität dieses technischen Geräts oder dieses technischen Gerätesystems mit einer technischen Spezifikation zur IT-Sicherheit wie zuvor beschrieben durchgeführt und es wird dann, wenn eine Obsoleszenz festgestellt wird, das technische Gerät oder technische Gerätesystem einer Aktualisierung unterzogen oder das Betreiben des technischen Geräts oder technischen Gerätesystems wird beendet. In dieser Weiterbildung der Erfindung wird das technische Gerät oder Gerätesystem hinsichtlich der IT-Sicherheit sicherer als bislang bekannt betrieben.

Das erfindungsgemäße Computerprogrammprodukt ist eingerichtet und ausgebildet, bei Ausführung auf einem Rechner die Schritte des zuvor beschriebenen erfindungsgemäße Verfahrens auszuführen.

Der erfindungsgemäße Prüfrechner weist ein erfindungsgemäßes Computerprogrammprodukt wie vorhergehend beschrieben auf.

Nachfolgend wird die Erfindung anhand eines in der Zeichnung dargestellten Ausführungsbeispiels näher erläutert. Die einzige Zeichnungsfigur 1 zeigt einen Ablauf des erfindungsgemäßen Verfahrens schematisch in einer Prinzipskizze.

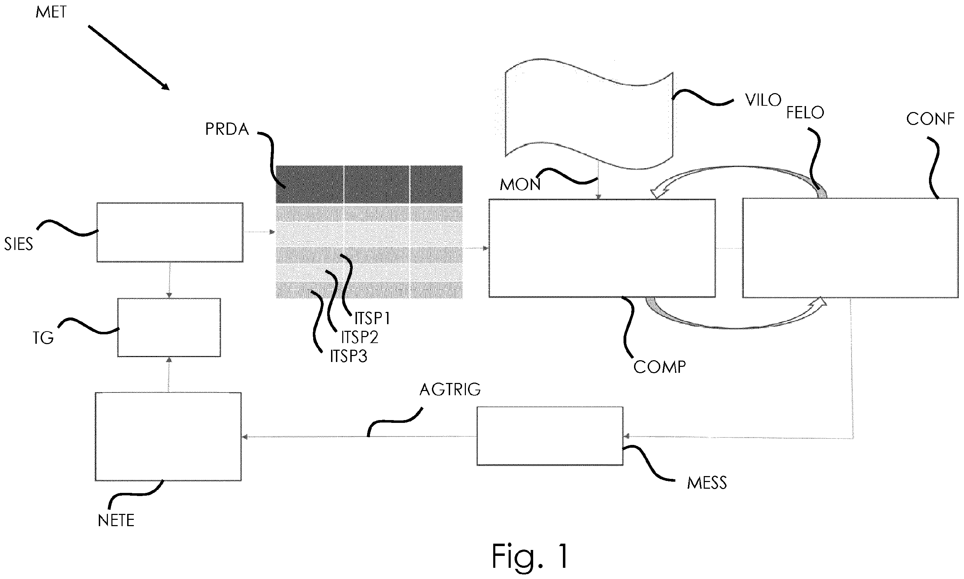

Das in der Figur 1 dargestellte erfindungsgemäße Verfahren MET ist ein Verfahren MET zum Feststellen CONF einer Obsoleszenz einer Konformität eines technischen Geräts TG mit einer technischen Spezifikation zur IT-Sicherheit.

Im dargestellten Verfahren bildet die technische Spezifikation einen Standard zur Informationssicherheit. In weiteren, nicht eigens dargestellten Ausführungsbeispielen handelt es sich bei dem Standard um einen Standard zur Funktionssicherheit oder die technische Spezifikation bildet eine hybride technische Spezifikation, welche sowohl einen ersten Standard zur Informationssicherheit als auch einen zweiten Standard zur Funktionssicherheit aufweist. Die Konformität des technischen Geräts TG mit der technischen Spezifikation wird vorliegend mit einem IT-Sicherheitszertifikat dokumentiert.

Das technische Gerät TG ist im dargestellten Ausführungsbeispiel eine Steuerungseinrichtung zur Steuerung einer digitalen Fertigungsanlage. In weiteren, nicht eigens dargestellten Ausführungsbeispielen ist das technische Gerät TG ein Werkzeug der digitalen Fertigungsanlage oder eine Steuereinrichtung eines Prozessleitsystems, insbesondere einer Biotechnologieanlage.

Das technische Gerät TG ist im dargestellten Ausführungsbeispiel zur Steuerung digitalen 3D-Drucks mittels der Fertigungsanlage ausgebildet. Dazu übernimmt das technische Gerät TG zum einen Eingangsdaten in Form von Fertigungsvorgaben, wie beispielsweise eine Fertigungszeit und eine Fertigungstoleranz. Ausgehend von diesen Fertigungsvorgaben ermittelt das technische Gerät TG eine erforderliche Werkzeugallokation und einen Produktionsablauf, wobei der Produktionsablauf einen Arbeitsplan und eine Stückliste umfasst. Basierend auf dem Arbeitsplan gibt das technische Gerät TG einen Satz von Ausgabedaten in Form von Steuerungsbefehlen aus. Die Steuerungsbefehle dienen zur Umsetzung des Arbeitsplans mittels der mittels der Werkzeug-Allokation allokierten Fertigungswerkzeuge, beispielsweise 3D-Drucker, Förderbänder und Materialförderschnecken.

Das technische Gerät TG hält zudem einen Satz von Konfigurationsdaten in einem Konfigurationsdatenspeicher vor, welche die Ermittlung der Ausgabedaten in Abhängigkeit der Eingangsdaten, hier der Fertigungsvorgaben, ermöglichen. Die Konfigurationsdaten umfassen im dargestellten Ausführungsbeispiel einen Planungsalgorithmus, mittels dessen anhand der Fertigungsvorgaben die Stückliste und wie oben beschrieben der Arbeitsplan ermittelt werden können. Zudem hält das technische Gerät TG mehrere kryptographische Algorithmen vor, insbesondere einen kryptographischen Autorisierungsalgorithmus, mittels welchem die Herkunft der Eingangsdaten überprüft wird. Dabei sind die Eingangsdaten mittels eines kryptographischen Herkunftszertifikats, hier einer digitalen Herkunftssignatur, autorisiert. Mittels des kryptographischen Autorisierungsalgorithmus des technischen Geräts TG wird das kryptographische Herkunftszertifikat der Eingangsdaten überprüft. Zudem werden die Ausgabedaten mittels eines von technischen Gerät TG vorgehaltenen kryptographischen Verschlüsselungsalgorithmus verschlüsselt, sodass die konkreten technischen Fertigungsabläufe der digitalen Fertigungsanlage nicht von unberechtigter Seite ausgespäht werden können.

Das technische Gerät TG steht im dargestellten Ausführungsbeispiel zudem in einem spezifischen Gerätekontext, hier einem nachfolgend beschriebenen Kommunikationskontext: so ist das technische Gerät TG beispielsweise zur Aktualisierung des Planungsalgorithmus über einen nicht eigens in der Figur dargestellten Cloudspeicher ausgebildet. Dazu ist das technische Gerät zur Kommunikation mit dem Cloudspeicher mittels Trust-Parametern ausgebildet, bei welchem die Trust-Parameter die Vertrauenswürdigkeit einer jeweils vom technischen Gerät TG empfangenen und aus dem Cloudspeicher bezogenen Aktualisierung kennzeichnen. Solche Trust-Parameter können beispielsweise eine digitale Signatur des Cloudspeichers oder ein über eine Mehr-Wege-Kommunikation erhaltener Prüfwert der jeweiligen Aktualisierung sein. Zur Kommunikation mit dem Cloudspeicher weist das technische Gerät TG ein Kommunikationsmodul mit einer bestimmten Betriebssoftware einer bestimmten Betriebssoftwareversion auf, welches die Kommunikation mit dem Cloudspeicher und eine Prüfung der Vertrauenswürdigkeit eines empfangenen Updates mittels der Trust-Parameter vornimmt.

Das vorhergehend beschriebene technische Gerät TG wird nun mittels eines erfindungsgemäßen, computerimplementierten Prüfverfahrens auf eine Obsoleszenz einer Konformität des technischen Geräts TG mit dem IT-Sicherheitszertifikat geprüft. D. h. es wird geprüft, ob das technische Gerät TG den Erfordernissen des IT-Sicherheitszertifikats nach wie vor genügt oder ob zwischenzeitlich eine Obsoleszenz der Konformität eingetreten ist. Im letzteren Fall genügt das technische Gerät TG den technischen Erfordernissen des IT-Sicherheitszertifikats nicht länger.

Die Erfordernisse des IT-Sicherheitszertifikats sind im dargestellten Verfahren wie oben beschrieben die Erfordernisse der technischen Spezifikation des oben beschriebenen Standards zur Informationssicherheit, d. h. das IT-Sicherheitszertifikat zertifiziert diesen Standard zur Informationssicherheit.

Dazu wird zunächst optional bei dem erfindungsgemäßen Verfahren die Konformität des technischen Geräts TG mit dem IT-Sicherheitszertifikat festgestellt. Zur Feststellung der Konformität wird eine Konformitätsprüfung SIES auf den zuvor beschriebenen Standard zur IT-Sicherheit durchgeführt. Ist das technische Gerät TG mit dem Standard konform, so erhält das technische Gerät TG das IT-Sicherheitszertifikat.

Die Ergebnisse der Konformitätsprüfung werden nachfolgend in einer Prüfdatenbank PRDA abgelegt. Die Prüfdatenbank PRDA enthält einzelne IT-Sicherheitsparameter ITSP1, ITSP2, ITSP3, die für das vorliegende technische Gerät TG anwendbar sind. Bei der Konformitätsprüfung wird das technische Gerät TG auf sämtliche anwendbaren IT-Sicherheitsparameter ITSP1, ITSP2, ITSP3 geprüft. Die Prüfergebnisse zu sämtlichen IT-Sicherheitsparametern ITSP1, ITSP2, ITSP3 werden in der Prüfdatenbank PRDA hinterlegt und werden später bei der Feststellung der Obsoleszenz herangezogen.

Solche IT-Sicherheitsparameter ITSP1, ITSP2, ITSP3 sind beispielsweise mittels Asset-Scanning gefundene Komponenten, vorliegend beispielsweise das Kommunikationsmodul des technischen Geräts TG, sowie die Betriebssoftwareversion der Betriebssoftware des Kommunikationsmoduls. Zudem umfassen die IT-Sicherheitsparameter ITSP1, ITSP2, ITSP3 Konfigurationsdaten, vorliegend den vorhergehend beschriebenen Planungsalgorithmus.

Ferner umfassen die IT-Sicherheitsparameter ITSP1, ITSP2, ITSP3 des technischen Geräts TG weitere vom technischen Gerät TG vorgehaltene Algorithmen, beispielsweise kryptographische Algorithmen, etwa den zuvor erwähnten Autorisierungsalgorithmus sowie den vorhergehend beschriebenen Verschlüsselungsalgorithmus.

Die vorgenannten IT-Sicherheitsparameter ITSP1, ITSP2, ITSP3 stellen potenzielle Schwachstellen dar, deren Verwendung die IT-Sicherheit des technischen Geräts TG ernsthaft beeinträchtigen kann. Diese IT-Sicherheitsparameter ITSP1, ITSP2, ITSP3 werden daher zur Ermittlung einer Konformitätsabweichung, also einer Obsoleszenz der Konformität, des technischen Geräts TG herangezogen: Wird etwa eine Schwachstelleninformation bei der bestimmten Betriebssoftwareversion entdeckt, so wird mittels Vergleichs COMP festgestellt, ob diese Betriebssoftwareversion bei dem Kommunikationsmodul des technischen Geräts TG eingesetzt wird. Ist dies der Fall, so wird in einem Schlussfolgerungsschritt FELO geschlossen, dass diese Schwachstelle auch im technischen Gerät TG vorhanden ist. Infolge der geschlussfolgerten Konformitätsabweichung aufgrund von vorhandenen Schwachstellen bei der Betriebssoftwareversion des Kommunikationsmoduls wird in einem Feststellungsschritt CONF geschlossen, dass das technische Gerät TG den Erfordernissen der technischen Spezifikation nicht mehr genügt. Es wird also eine Obsoleszenz der Konformität des technischen Geräts TG mit der technischen Spezifikation festgestellt. Somit genügt das technische Gerät TG nicht mehr den Kriterien des IT-Sicherheitszertifikats.

In diesem Fall kann die Obsoleszenz entweder einer Zertifizierungsstelle zur Zertifizierung des technischen Geräts TG mitgeteilt werden. Alternativ oder zusätzlich wird die Obsoleszenz einem Nutzer des technischen Geräts TG mittels einer Nachricht MESS mitgeteilt. Zusätzlich und mittels eines Triggers AGTRIG automatisiert wird eine erneute Konformitätsprüfung NETE des technischen Geräts TG zumindest hinsichtlich des jeweiligen IT-Sicherheitsparameters vorgenommen. Dazu wird zunächst das technische Gerät TG hinsichtlich derjenigen IT-Sicherheitsparameter ITSP1, ITSP2, ITSP3, zu welchen Schwachstelleninformationen erhalten worden sind, aktualisiert, beispielsweise mittels einer Software-Aktualisierung. Es erfolgt somit eine Aktualisierung und anschließend Rezertifizierung des technischen Geräts TG, d. h. eine erneute Bestätigung der Konformität des technischen Geräts TG. Ist eine solche Aktualisierung und Rezertifizierung des technischen Geräts TG nicht erfolgreich, so kann alternativ eine Obsoleszenz öffentlich erklärt werden, d. h. das IT-SicherheitsZertifikat wird öffentlich widerrufen.

Zum Erhalt von Schwachstelleninformationen werden Quellen VILO von Schwachstelleninformationen fortlaufend, d. h. regelmäßig mit mehreren Abfragen je Tag, beobachtet MON. Solche Quellen VILO von Schwachstelleninformationen können beispielsweise öffentlich zugängliche Repositorien sein, welche IT-Sicherheitsinformationen zu in den Repositorien bereitgehaltener Software nahezu in Echtzeit anbieten, beispielsweise Security-Tracker-Seiten von Open-Source-Repositorien. Ferner bilden öffentliche Stellen mit öffentlich einsehbaren Internetveröffentlichungen Quellen VILO von Schwachstelleninformationen, die nahezu in Echtzeit aktualisiert werden und die mehrmals täglich abgefragt werden können, beispielsweise der Warn- und Informationsdienst von CERT-Bund (CERT = engl. "Computer Emergency Response Team"). Zudem können Sicherheitsempfehlungen von Soft- und Hardwareherstellern Quellen VILO von IT-Sicherheitsinformationen darstellen, die IT-Sicherheitsinformationen zu ihren Produkten mehrmals täglich aktualisieren und die Kunden der Soft- und Hardwarehersteller in Echtzeit abrufen können.

Im dargestellten Ausführungsbeispiel können zusätzlich Umgebungsparameter als IT-Sicherheitsparameter in die Prüfung auf Obsoleszenz einbezogen werden: So können z.B. zusätzliche IT-Sicherheitsparameter ITSP1, ITSP2, ITSP3 infolge eines Einbaus einer durch Tests neu erkannten Firewall des Kommunikationsmoduls des technischen Geräts TG aufgenommen werden.

Das zuvor beschriebene erfindungsgemäße Verfahren wird mit einem erfindungsgemäßen Prüfrechner durchgeführt, welcher die Quellen VILO von Schwachstelleninformationen regelmäßig abfragt und welcher die Schwachstelleninformationen mit den IT-Sicherheitsparametern ITSP1, ITSP2, ITSP3 regelmäßig einem Vergleich COMP unterzieht. Die Feststellung der Obsoleszenz wird mittels einer auf dem Prüfrechner ablaufenden Programmroutine anhand der einzelnen Schwachstelleninformationen und der Vergleiche COMP unternommen. Zugleich veranlasst der Prüfrechner auch die erneute Konformitätsprüfung NETE des technischen Geräts TG.

Optional wird bei dem zuvor beschriebenen erfindungsgemäßen Verfahren eine erneute Konformitätsprüfung NETE des technischen Geräts TG dann vorgenommen, wenn sich eine Umgebungsanforderung des technischen Geräts TG ändert. Beispielsweise bildet eine neu eingerichtete oder geänderte Firewall der Fertigungsanlage eine geänderte Umgebungsanforderung an das technische Gerät TG, welche eine erneute Durchführung des zuvor beschriebenen erfindungsgemäßen Verfahrens triggert.

In weiteren, nicht eigens dargestellten Ausführungsbeispielen ist der Standard zur IT-Sicherheit beispielsweise der mit IEC 62443 4-2 bezeichnete Standard.

An die Stelle des im vorhergehenden Ausführungsbeispiels beschriebenen technischen Geräts TG kann in weiteren, nicht eigens dargestellten Ausführungsbeispielen ein technisches Gerätesystem treten, etwa ein Automatisierungssystem in Gestalt einer Fertigungsanlage oder einer verfahrenstechnischen Anlage.

Mittels des oben beschriebenen Verfahrens zur Feststellung einer Obsoleszenz des technischen Geräts TG wird das Gerät erfindungsgemäß betrieben. Dazu wird das Verfahren zur Feststellung einer Obsoleszenz wiederholt durchgeführt und dann, wenn das Auftreten einer Schwachstelleninformation festgestellt wird, das technische Gerät TG jedenfalls hinsichtlich desjenigen IT-Sicherheitsparameters ITSP1, ITSP2, ITSP3, dem die Schwachstelleninformation zugeordnet ist, einer Aktualisierung in Form einer Softwareaktualisierung unterzogen. Alternativ kann in diesem Fall das Betrieben des technischen Geräts TG auch beendet werden.

## Patentansprüche

1. Verfahren zur Feststellung einer Obsoleszenz einer Konformität eines technischen Geräts (TG) oder eines technischen Ge> rätesystems mit einer technischen Spezifikation zur IT-Sicherheit, bei welchem
- IT-Sicherheitsparameter (ITSP1, ITSP2, ITSP3) herangezogen werden, die der Spezifikation genügen,
- den IT-Sicherheitsparametern (ITSP1, ITSP2, ITSP3) jeweils mindestens eine potenzielle IT-Sicherheitsrelevanzinformation zugeordnet wird, wobei das tatsächliche Auftreten der IT-Sicherheitsrelevanzinformation fortdauernd überwacht (MON) wird, und abhängig von einem Auftreten der IT-Sicherheitsrelevanzinformation eine Obsoleszenz der Konformität festgestellt (CONF) wird.

2. Verfahren nach Anspruch 1, bei welchem dann, wenn das Auftreten der IT-Sicherheitsrelevanzinformation festgestellt wird, die Obsoleszenz des Konformität festgestellt (CONF) wird.

3. Verfahren nach einem der vorhergehenden Ansprüche, bei welchem die Konformität mittels eines Zertifikats dokumentiert wird.

4. Verfahren nach einem der vorhergehenden Ansprüche, bei welchem dann, wenn das Auftreten der IT-Sicherheitsrelevanzinformation festgestellt wird, das technische Gerät oder technische Gerätesystem einem Test (NETE) der Konformität mit der technischen Spezifikation unterzogen wird und vorzugsweise abhängig von dem Test die Obsoleszenz der Konformität festgestellt wird.

5. Verfahren nach einem der vorhergehenden Ansprüche, bei welchem die IT-Sicherheitsparameter eine oder mehrere der nachfolgenden Größen umfassen: eine Komponente und/oder ein Algorithmus und/oder ein Konfigurationsdatum des technischen Geräts oder Gerätesystems.

6. Verfahren nach einem der vorhergehenden Ansprüche, bei welchem das Auftreten der IT-Sicherheitsrelevanzinformation überwacht wird, indem eine Schwachstellen-Datenbank, vorzugsweise wiederholt, abgefragt wird.

7. Verfahren nach einem der vorhergehenden Ansprüche, welches dann, wenn sich eine Umgebungsanforderung an das technische Gerät (TG) oder das technische Gerätesystem ändert, wiederholt wird.

8. Verfahren nach einem der vorhergehenden Ansprüche, bei welchem dann, wenn das Auftreten einer Vulnerabilitätsinformation festgestellt wird, das technische Gerät (TG) oder technische Gerätesystem zumindest hinsichtlich des IT-Sicherheitsparameters (ITSP1, ITSP2, ITSP3), dem die Vulnerabilitätsinformation zugeordnet ist, einer Aktualisierung, insbesondere einer Softdwareaktualisierung, unterzogen wird.

9. Verfahren nach einem der vorhergehenden Ansprüche, bei welchem das technische Gerät (TG) oder technische Gerätesystem mindestens eine Maschine und/oder ein Steuerungsgerät, insbesondere ein Anlagensteuerungsgerät, und/oder einen Sensor und/oder einen Aktor aufweist.

10. Verfahren zum Betreiben eines technischen Geräts (TG) oder eines technischen Gerätesystems, bei welchem ein Verfahren zur Feststellung einer Obsoleszenz einer Konformität dieses technischen Geräts (TG) oder dieses technischen Gerätesystems mit einer technischen Spezifikation zur IT-Sicherheit durchgeführt wird und bei welchem dann, wenn eine Obsoleszenz festgestellt wird, das technische Gerät (TG) oder technische Gerätesystem einer Aktualisierung unterzogen wird oder das Betreiben des technischen Geräts (TG) oder technischen Gerätesystems beendet wird.

11. Computerprogrammprodukt, welches bei Ausführung auf einem Rechner zur Ausführung eines Verfahrens nach einem der vorhergehenden Ansprüche ausgebildet und eingerichtet ist.

12. Prüfrechner mit einem Computerprogrammprodukt nach dem vorhergehenden Anspruch.
